# EUROPÄISCHE PATENTSCHRIFT

(11) **EP 0 557 477 B1**
(45) Veröffentlichungstag und Bekanntmachung des Hinweises auf die Patenterteilung: **02.05.1997**
(21) Anmeldenummer: 92917212.0
(22) Anmeldetag: 05.08.1992
(51) Int. Cl.: A46B 9/04, A61C 15/00

(54) **ZAHNBÜRSTE**
TOOTHBRUSH
BROSSE A DENTS

(30) Priorität: 16.09.1991 DE 4130741; 05.11.1991 DE 4136376
(43) Veröffentlichungstag der Anmeldung: 01.09.1993
(73) Patentinhaber: Braun Aktiengesellschaft, Frankfurt am Main (DE)
(72) Erfinder: HILFINGER, Peter, D-6380 Bad Homburg (DE); BOLAND, Bernhard, D-6000 Frankfurt 60 (DE)
(86) Internationale Anmeldenummer: EP9201773
(87) Internationale Veröffentlichungsnummer: WO9305679

(56) Entgegenhaltungen:
- DE-U- 9 014 271
- US-A- 3 204 275
- US-A- 3 939 520
- US-A- 4 880 382

## Beschreibung

Die Erfindung geht aus von einer motorisch angetriebenen Zahnbürste mit einem Griffteil und einem daran ankuppelbaren Bürstenteil, welches eine Bürste zum Reinigen der Zähne, insbesondere der Interdentalräume aufweist, wobei die Bürste aus einem Borstenträger und daran festgelegten Borsten besteht und mittels des Antriebes in eine oszillierende Drehbewegung um die Achse eines Schaftes des Borstenträgers versetzbar ist, der Borstenträger als stabförmiger Schaft mit einem ersten und zweiten Endabschnitt ausgebildet und im Bereich des zweiten Endabschnittes unbeborstet ist, die Borsten sich im Bereich des ersten Endabschnittes bezüglich des Schaftes radial und umfangsmäßig verteilt erstrecken.

Eine derartige Zahnbürste ist schon aus der US 4 880 382 A bekannt. Allerdings besteht bei dieser Zahnbürste das Problem, daß die Zahnseitenwände im Bereich des Interdentalraumes nicht ausreichend gereinigt werden. Auch ist die Handhabung dieser Zahnbürste nachteilig für den Benutzer.

Aus der Druckschrift DE 90 14 271 U1 ist eine weitere Zahnbürste bekannt. Diese elektrisch betriebene Zahnbürste weist einen Antrieb für die Bürste auf, der diese in eine rotierende Bewegung versetzt. Dabei rotiert die Bürste um eine Achse, die senkrecht zur Längsachse des Bürstengriffteils angeordnet ist. Die Bürste selbst hat entweder die Form einer Walze oder eines Kegels, wobei die Kegelspitze am ersten Endabschnitt angeordnet ist. Diese elektrische Zahnbürste soll sich in besonderer Weise zur Reinigung der Zähne bei Vorhandensein von feststehenden Zahnspangen eignen. Wird diese elektrische Zahnbürste jedoch zur Reinigung insbesondere des Interdentalraumes der Zähne benutzt, besteht die Gefahr, daß der als stabförmiger Schaft ausgebildete Borstenträger während des Putzvorganges mit den Zähnen oder dem Zahnfleisch in Kontakt kommt und Beschädigungen der Zahnoberfläche bzw. Verletzungen des Zahnfleisches auslöst.

Des weiteren sind aus der US 4 751 761 A, der US 4 387 479 A oder der US 3 204 275 A handbetätigte Zahnbürsten zur Reinigung, insbesondere des Interdentalraumes bekannt, bei denen der als stabförmiger Schaft ausgebildete Borstenträger aus einer verdrillten Doppeldrahtanordnung besteht und die Borsten zwischen den Drähten der Doppeldrahtanordnung festgelegt sind. Diese Bürsten für handbetätigte Zahnbürsten weisen ebenfalls entweder eine Walzenform auf oder sind kegelig ausgebildet, wobei die Spitze des Kegels dem ersten Endabschnitt des Schaftes zugeordnet ist. Auch mit diesen Bürsten, bei denen der Borstenträger aus einem Metalldraht besteht, tritt beim praktischen Gebrauch die Gefahr auf, daß die Spitze am ersten Abschnitt des Borstenträgers zu Verletzungen des Zahnfleisches bzw. zu Beschädigungen der Zahnoberfläche führt. Darüber hinaus sind diese handbetätigten Interdentalzahnbürsten nicht sonderlich gut zur Reinigung von kleinen Interdentalräumen geeignet. Das liegt daran, daß der Benutzer gemäß den Empfehlungen der Hersteller solcher bekannten Interdentalbürsten den Schaft der Bürste zur Reinigung des Interdentalraumes in diesen einführen und hin- und herbewegen soll. Da der Schaft an sich bereits Durchmesser im Bereich zwischen 0,2 mm - 0,4 mm aufweist, kann die Interdentalbürste in enge Zahnzwischenräume nicht angeführt werden. Aber auch die Borsten dieser Bürsten können kaum in die Interdentalräume eindringen, da am ersten Endabschnitt, der am besten hinsichtlich der Handhabung zur Reinigung geeignet ist, praktisch keine oder nur sehr kurze Borsten (Kegelformbürste) vorhanden sind. Bei walzenförmigen Bürsten können die Borsten ebenfalls nur geringfügig in die Zahnzwischenräume eindringen, da die benachbarten Borsten sich auf den Zahnaußenflächen bzw. -innenflächen abstützen.

Aufgabe der Erfindung ist es, eine Bürste für eine Zahnbürste zu schaffen, welche zu besonders guten Ergebnissen bei der Reinigung der Interdentalräume bzw. der angrenzenden Zahnseitenwände führt, wobei eine gute Handhabung der Bürste gewährleistet ist.

Diese Aufgabe wird im wesentlichen dadurch gelöst, daß bei einer Bürste mit den eingangs genannten Merkmalen die Länge der Borsten ausgehend vom ersten Endabschnitt des Schaftes zuerst in Richtung zur Mitte des beborsteten Abschnitts des Schaftes abnimmt und dann in Richtung des zweiten Endabschnitts desSchaftes wieder zunimmt.

Durch eine Bürste mit diesen Merkmalen ergeben sich folgende Vorteile:

Wird der Borstenträger der Bürste - abweichend von der herkömmlichen, empfohlenen Putzbewegung - parallel zu den Außen- oder Innenflächen der Zähne geführt, können die am ersten Endabschnitt vorgesehenen längeren Borsten äußerst wirksam in die Interdentalräume zwischen den Zähnen eingreifen und diese Bereiche wirksam reinigen. Auch der Bereich der Zahnsäume wird von den längeren Borsten am ersten Endabschnitt gut erfaßt und wirksam gereinigt. Bei dieser Handhabung der Bürste besteht nicht die Gefahr, daß der Borstenträger mit den Zähnen oder dem Zahnfleisch in Berührung kommt, da die kürzeren Borsten sich an den Zähnen abstützen, während die längeren Borsten in die Zahnzwischenräume eindrängen. Wird der Borstenträger der Bürste nach der herkömmlichen Art hingegen in einen Interdentalraum zwischen zwei Zähnen eingeführt, bewirken die am ersten Endabschnitt angeordneten längeren Borsten, die sich an den benachbarten Seitenwänden der beiden Zähne abstützen, daß ein unmittelbarer Kontakt der Zähne bzw. des Zahnfleisches mit dem Borstenträger nicht auftreten kann. Somit ist auch bei dieser Art der Handhabung der Bürste eine Verletzungs- oder Beschädigungsgefahr praktisch ausgeschlossen. Dadurch, daß die Länge der Borsten ausgehend vom ersten Endabschnitt des Schaftes zuerst in Richtung zur Mitte des beborsteten Abschnitts des Schaftes ab- und dann in Richtung des zweiten Endabschnitts des Schaftes wieder zunehmen, nimmt die Bürste die Gestalt zweier Kegelstümpfe an, die an den Flächen ihrer kleineren Durchmesser aneinanderstoßen. Durch die größeren Durchmesser an den Enden des beborsteten Abschnitts sind die Zähne und das Zahnfleisch gut vor Berührungen durch den Borstenträger geschützt. Durch den großen Durchmesser der Bürste am ersten Endabschnitt ist eine sehr gute Reinigung der Zahnseitenwände im Interdentalraum gegeben. Schließlich wird durch den kleineren Durchmesser der Bürste im mittleren Bereich des beborsteten Abschnitts die typische Interdentalreinigungsbewegung, nämlich das kreisförmige Bewegen der Bürste im Interdentalraum, wesentlich erleichtert, da die Bürste durch die als Begrenzung wirkenden größeren Durchmesser an den Enden des beborsteten Abschnitts automatisch in dem mittleren Bereich gehalten wird.

Vorteilhaft ist es nach einer besonderen Ausgestaltung der Erfindung, daß die Länge der Borsten mit axialem Abstand vom ersten Endabschnitt des Schaftes zuerst linear abnimmt und dann wieder linear zunimmt.

Eine andere vorteilhafte Weiterbildung der Erfindung besteht darin, daß der kleinste Durchmesser der Bürste symmetrisch in der Mitte des beborsteten Abschnitts des Schaftes vorgesehen ist.

Eine vorteilhafte Dimensionierung der Bürste liegt vor, wenn der Durchmesser der Bürste von einem Wert im Bereich 8 +/- 2 mm zuerst auf einen Wert im Bereich 4 +/- 2 mm abnimmt und dann wieder auf einen Wert im Bereich 8 +/-2 mm zunimmt.

Als vorteilhafte Borstenstärke haben sich Werte im Bereich 0,1524 +/- 0,0254 mm (6 +/- 1 mil) herausgestellt.

Gemäß einem weiteren Merkmal der Erfindung nimmt die axiale Länge des ersten Abschnittes des Schaftes Werte im Bereich von 12 +/- 3 mm und die des zweiten Abschnittes des Schaftes Werte im Bereich von 9 +/- 3 mm an. Einerseits wird durch diese Maßnahme für eine ausreichende Länge des beborsteten Abschnittes des Schaftes zum Erzielen einer guten Reingungswirkung gesorgt, zum anderen ist der unbeborstete Abschnitt des Schaftes ausreichend lang bemessen, um diesen an einen Bürstenhalter durch Einspritzen, Einstecken oder sonstiges Festlegen zu befestigen.

Weiterhin ist es vorteilhaft, wenn der Schaft aus einer verdrillten Doppeldrahtanordnung besteht und die Borsten zwischen den Drähten der Doppeldrahtanordnung festgelegt sind.

Nach einem weiteren Merkmal der Erfindung ist der Schaft der Bürste im wesentlichen senkrecht zu einer gemeinsamen Längsachse des Griffteils und des Bürstenteils angeordnet. Durch diese abgewinkelte Stellung der Bürste bezüglich der Längsachse ergibt sich eine äußerst einfache Handhabung der Zahnbürste, da die Bürste durch den Benutzer ohne weiteres parallel zu den Zahnaußenflächen bzw. -innenflächen, wie auch senkrecht hierzu geführt werden kann.

Bei einer besonders vorteilhaften Ausgestaltung der Erfindung wird die Bürste in eine oszillierende Drehbewegung relativ zu dem Schaft versetzt, wobei der Oszillationswinkel bevorzugt Werte im Bereich von +/- 20° bis +/- 100°, bevorzugt +/- 35° +/- 5° annimmt. Durch diese Maßnahme wird folgender störender, unter Umständen sogar gefährlicher Effekt vermieden, der bei Zahnbürsten auftritt, bei denen die Bürste rotierend in einer Richtung angetrieben wird. Werden solche Zahnbürsten mit Interdentalbürsten ausgestattet, deren Schaft aus einer verdrillten Doppeldrahtanordnung besteht, kann der verdrillte Schaft sozusagen als ein Gewinde wirken, das sich bei entsprechendem Drehsinn der Bürste in den Interdentalraum zwischen zwei Zähnen selbsttätig bis zum Anschlag am Bürstenträger hineindreht, ohne daß sich dies vom Benutzer vermeiden ließe. Größere Schäden an den Zahnoberflächen bzw. dem Zahnfleisch des Benutzers sind dann nicht auszuschließen. Hier bietet die Verwendung einer Bürste Abhilfe, die in eine oszillierende Drehbewegung relativ zum Schaft versetzbar ist. Der Oszillationswinkel nimmt dabei bevorzugt Werte im Bereich von +/- 35° +/- 5° an. Aufgrund des kleinen Drehwinkels wird die Neigung der Bürste, sich aufgrund der verdrillten Doppeldrahtanordnung des Schaftes in den Interdentalraum hineinzuschrauben, praktisch auf Null verringert, zumal ein etwaiges geringfügiges Hineindrehen während einer Schwingungsperiode der oszillierenden Drehbewegung durch die nächste Schwingungsperiode rückgängig gemacht wird. Praktische Versuche haben gezeigt, daß durch diesen oszillierenden Antrieb der Bürste ein vom Benutzer gewollt herbeigeführtes Eindringen in den Interdentalraum sogar erleichtert wird.

Weitere Merkmale, Vorteile und Anwendungsmöglichkeiten der Erfindung ergeben sich aus den nachfolgenden Beschreibungen der Ausführungsbeispiele, die in der Zeichnung näher dargestellt sind. Es zeigen:
- Fig. 1: eine schematische Darstellung einer nicht beanspruchten elektrischen Zahnbürste in Seitenansicht,
- Fig. 2a, b: ein erstes, nicht beanspruchtes Ausführungsbeispiel einer Bürste, gelöst vom bzw. befestigt am Bürstenhalter,
- Fig. 3a, b: ein zweites, nicht beanspruchtes Ausführungsbeispiel einer Bürste, gelöst vom bzw. befestigt am Bürstenhalter,
- Fig. 4a, b: ein drittes, beanspruchtes Ausführungsbeispiel einer Bürste, gelöst vom bzw. befestigt am Bürstenhalter.
- Fig. 5, 6, 7 a, b, c: verschiedene Positionierungen der Bürsten bezüglich der Zähne zur Erläuterung der möglichen Putzbewegungen.

In den Figuren ist mit der Bezugsziffer 20 eine elektrische Zahnbürste bezeichnet. Die Zahnbürste 20 besteht aus einem Griffteil und einem daran ankuppelbaren Bürstenteil 24. Das Griffteil 22 nimmt einen Akkumulator 26 oder auch eine Batterie auf. Weiterhin ist in dem Griffteil ein Elektromotor 28 und eine Umsteuerungseinrichtung 30 zur Umsetzung der kontinuierlichen Rotationsbewegung des Elektromotors in eine alternierende Drehbewegung angeordnet. Am Griffteil 22 ist außen ein Schalter 32 zur Aktivierung der Zahnbürste 20 angebracht. Das Bürstenteil 24 weist ein hohles Trägerrohr 36 auf, welches eine Welle 34 aufnimmt. Das Trägerrohr 36 und die Welle sind über eine nicht näher dargestellte Kupplung 40 mit dem Griffteil 22 verbindbar. An dem dem Griffteil 22 abgewandten Ende des Bürstenteils 24 ist eine Bürste 41 angeordnet, die an einem Bürstenhalter 44 festgelegt ist. Die Bürste 41 weist als Borstenträger einen stabförmigen Schaft 38 auf, von dem sich Borsten 45 in radialer Richtung und umfangsmäßig verteilt erstrecken. Diese umfangsmäßige Verteilung muß selbstverständlich keine Gleichverteilung sein. Die Borsten können bezüglich des Umfanges natürlich auch Verteilungsschwerpunkte aufweisen, so daß die Beborstung wechselweise dichter oder weniger dicht ist. Der Bürstenhalter 44 wird über ein Kegelradgetriebe 42 von der Welle 34 in eine alternierende Drehbewegung versetzt. Hierzu wirkt eine am Fuße des Bürstenhalters 44 angeordnete Kegelradverzahnung 46 mit einem am Kopfende der Welle 34 vorgesehenen Kegelradsegment 48 zusammen.

Die Drehachse des Bürstenhalters 44 bzw. der Bürste 41 schließt mit der Drehachse der Welle 34 bzw. einer gemeinsamen Längsachse des Griffteils 22 und des Bürstenteils 24 einen im wesentlichen rechten Winkel ein. Dieser Winkel kann jedoch, ohne die Erfindung zu beschränken, auch um +/- 60° vom rechten Winkel abweichen. Der vom Bürstenhalter 44 bzw. der Bürste 41 überstrichene Drehwinkelbereich kann Werte im Bereich zwischen +/- 20° und +/- 100° annehmen. Bevorzugt wird jedoch ein Wert im Bereich von etwa +/- 35° +/- 5°. Eine hinsichtlich der Putzbewegung vergleichbare Zahnbürste mit einem herkömmlichen Bürstenkopf ist im einzelnen in der internationalen Patentanmeldung mit der Veröffentlichungs-Nr. WO-A-91/07116 der Anmelderin beschrieben.

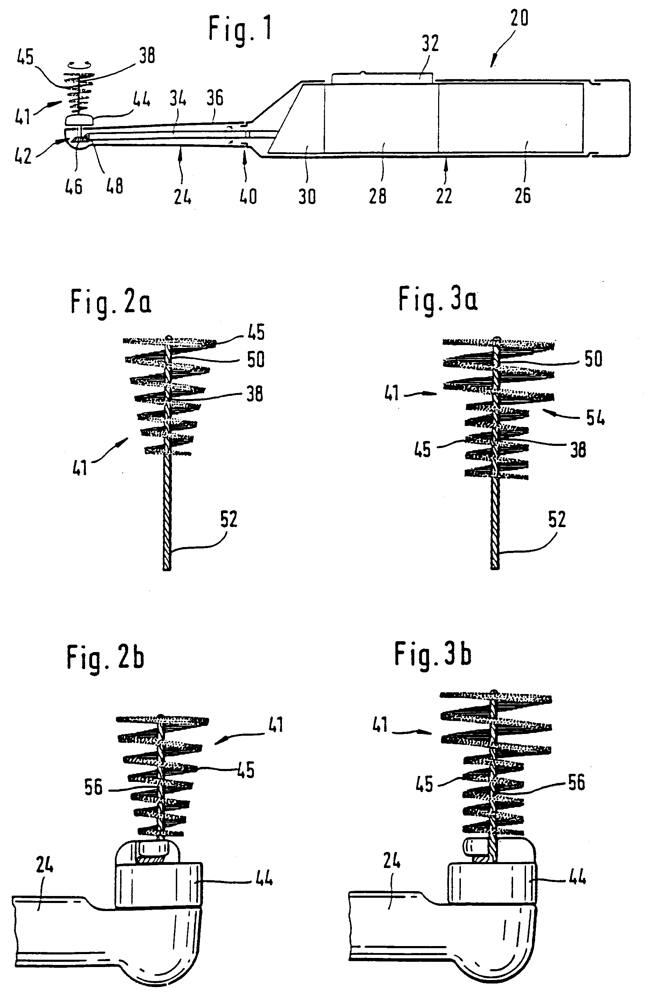

Die Bürste 41 besteht aus einem insbesondere stabförmigen Schaft 38, der beispielsweise durch eine verdrillte Doppeldrahtanordnung 56 gebildet werden kann (Fig. 2b, 3b, 4b). Vor einem Verdrillen der Doppeldrahtanordnung 56 werden die Borsten 45 in den Zwischenraum zwischen den Drähten der Doppeldrahtanordnung 56 eingebracht. Zum Festlegen der Borsten 45 an dem als Schaft 38 ausgebildeten Borstenträger wird die Doppeldrahtanordnung 56 anschließend verdrillt, so daß die einzelnen Borsten 45 spiralig bezüglich des Schaftes 38 angeordnet sind. Bevorzugt sind die Borsten 45 radial bezüglich des Schaftes 38 angeordnet und erstrecken sich umfangsmäßig verteilt, bevorzugt gleich verteilt. Der Schaft 38 kann auch als einstückiges Kunststoffteil, in dem die Borsten 45 durch Umspritzen oder ähnliche bekannte Befestigungstechniken festgelegt sind, ausgebildet.

Der Schaft 38 weist einen ersten Endabschnitt 50 und einen zweiten Endabschnitt 52 auf. Ausgehend vom ersten Endabschnitt 50 ist der Schaft 38 über einen größeren Bereich mit Borsten 45 versehen, während im Bereich des zweiten Endabschnittes 52 des Schaftes keine Borsten an diesem fixiert sind. Der unbeborstete Abschnitt des Schaftes 38 im Bereich des zweiten Endabschnittes 52 dient zum Festlegen der Bürste 41 an dem Bürstenhalter 44. Diese Festlegung kann beispielsweise durch Umspritzen des unbeborsteten Schaftes 38 mit Kunststoffmaterial, durch Klemmen oder ähnliche Befestigungsmaßnahmen bewirkt werden. Ausgehend vom ersten Endabschnitt 50 ist der Schaft 38 mit Borsten 45 einer vorgegebenen Länge bestückt, wobei die Länge der Borsten in Richtung des zweiten Endabschnittes 52 des Schaftes 38 abnimmt.

Gemäß dem Ausführungsbeispiel der Fig. 2 nimmt die Länge der Borsten in Richtung des zweiten Endabschnittes 52 linear ab, so daß die Bürste 41 die Form eines Kreiskegels bzw. Kreiskegelstumpfes aufweist, wobei der größte Radius des Kreiskegels im Bereich des ersten Endabschnittes 50 vorgesehen ist. Der größe Durchmesser der Bürste 41 nimmt bevorzugt Werte im Bereich von 10 +/- 2 mm an, wobei sich dieser Durchmesser für eine kegelstumpfförmige Bürste 41 auf minimale Durchmesser im Bereich von 5 +/- 2 mm verringert.

Im Bereich des ersten Endabschnittes 50 sind bevorzugt Borsten 45 einer größeren Borstenstärke vorgesehen, als im restlichen Bereich der Bürste 41. So hat es sich als vorteilhaft herausgestellt, daß die Borstenstärke im Bereich des größten Durchmessers der Bürste 41 Werte von 0,1524 +/- 0,0254 mm (6 +/- mil) aufweist. Der restliche Bereich der Bürste 41 wird durch Borsten 45 einer Borstenstärke im Bereich von 0,1016 +/- 0,0254 mm (4 +/- 1 mil) gebildet.

In einer weiteren Ausführungsform der Bürste 41 (Fig. 3) nimmt die Länge der Borsten 45 mit wachsendem Abstand vom ersten Endabschnitt 50 des Schaftes 38 stufenförmig ab. Im Ausführungsbeispiel ist eine einzige Stufe 54 vorgesehen, die etwa bei einem Drittel der Gesamtlänge des beborsteten Abschnittes der Bürste 41, ausgehend vom ersten Endabschnitt 50, angeordnet ist. Die Form dieser Bürste 41 ähnelt der zweier hintereinander angeordneter Walzen, wobei die erste Walze einen größeren Durchmesser aufweist als die zweite Walze. Bevorzugt liegt der Durchmesser der größeren Walze bei Werten im Bereich von 12 +/- 2 mm und der Durchmesser der kleineren Walze bei Werten im Bereich von 6 +/- 2 mm. Von Vorteil weisen die Borsten der größeren Walze eine Borstenstärke im Bereich von 0,1524 +/- 0,0254 mm (6 +/- 1 mil) und die Borsten der kleineren Walze Werte im Bereich von 0,1016 +/- 0,0254 mm (4 +/- 1 mil) auf.

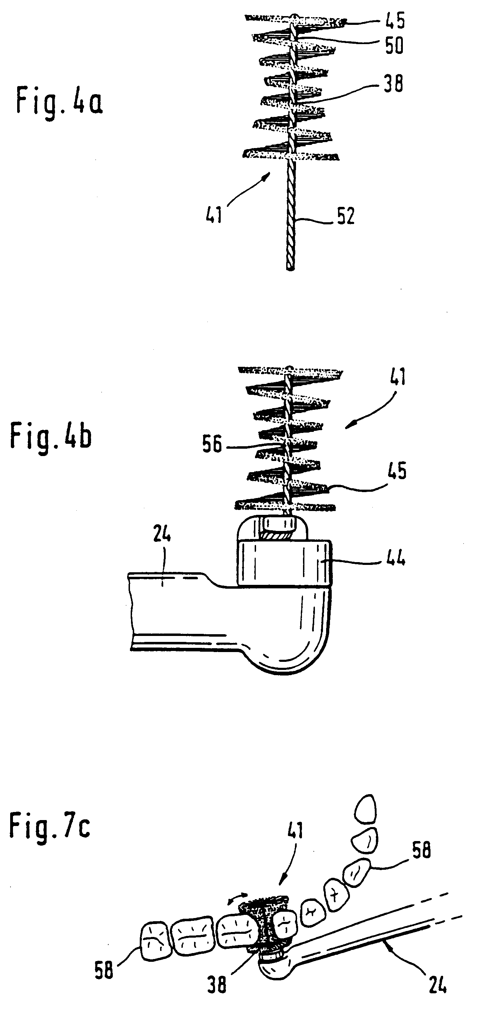

Bei dem Ausführungsbeispiel nach der Fig. 4 nimmt die Länge der Borsten 45 ausgehend vom ersten Endabschnitt 50 zuerst in Richtung zur Mitte des beborsteten Abschnitts des Schaftes 38 ab, um danach wieder in Richtung des zweiten Endabschnitts 52 zuzunehmen. Die Bürste 41 weist dadurch die Form zweier Kegelstümpfe auf, die an ihren Flächen mit den kleineren Durchmessern aneinandergesetzt sind, so daß der Durchmesser der Bürste 41 etwa in der Mitte am kleinsten ist und an den Enden des beborsteten Abschnitts am größten. Die Länge des Bereichs, in dem die Länge der Borsten 45 zur Mitte hin abimmt, entspricht im wesentlichen der Länge des Bereichs, in dem die Länge der Borsten 45 von der Mitte ausgehend wieder zunimmt. Der kleinste Durchmesser der Bürste 41 liegt somit im wesentlichen symmetrisch in der Mitte des beborsteten Abschnitts des Schaftes 38. Die Abnahme bzw. Zunahme der Länge der Borsten 45 zur Mitte hin bzw. von der Mitte ausgehend erfolgt vorzugsweise linear.

Der größte Durchmesser der Bürste 41 in Richtung zu dem ersten und dem zweiten Endabschnitt 50, 52 nimmt bevorzugt Werte im Bereich von 8 +/- 2 mm an, während der kleinste Durchmesser der Bürste 41 bevorzugt Werte im Bereich von 4 +/- 2 mm beträgt. Die Borstenstärke weist bevorzugt Werte im Bereich von 0,1524 +/- 0,0254 mm (6 +/- 1 mil) auf.

Während die Figuren 2a, 3a, 4a eine unbefestigte Bürste 41 zeigen, ist in den Figuren 2b, 3b, 4b die am Bürstenhalter 44 fixierte Bürste 41 dargestellt. Es ist erkennbar, daß der Schaft 38, der insbesondere als Doppeldrahtanordnung 56 ausgebildet ist, in etwa einen rechten Winkel zu einer Mittelachse des Bürstenteils 24 bildet. Durch den motorischen Antrieb der Zahnbürste 20 wird die Bürste 41 in eine oszillierende Drehung um den Borstenhalter versetzt, wobei der alternierende Drehwinkel Werte im Bereich von bevorzugt +/- 35° annimmt.

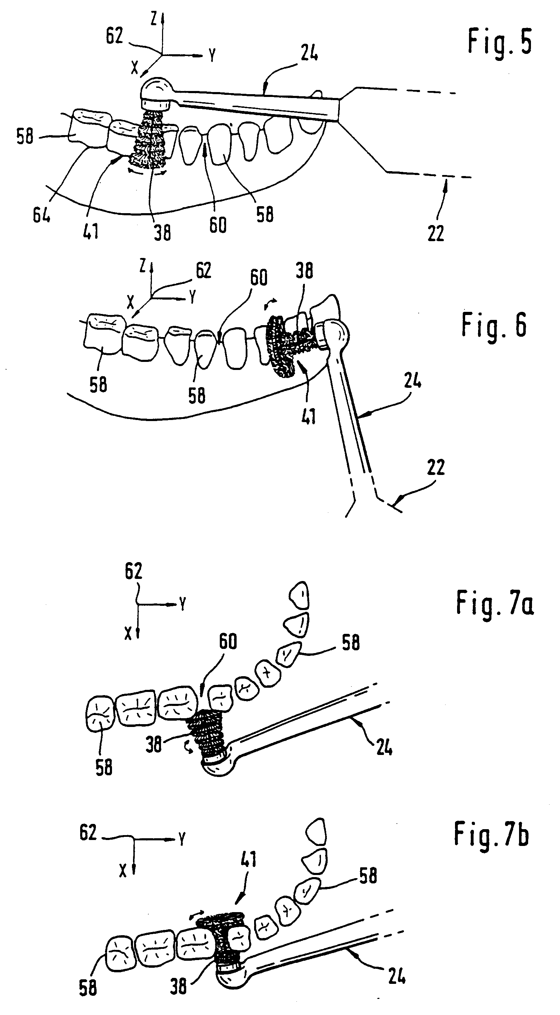

Die möglichen Positionierungen der Bürste 41 bezüglich der Zähne 58 zur Reinigung insbesondere der Interdentalräume 60 bzw. Zahnsäume 64 ist in den Figuren 5, 6 und 7 näher erläutert. Zur Reinigung der Zahnsäume 64 bzw. der Eintrittsbereiche der Interdentalräume 60 wird der Schaft 38 der Bürste 41, die kegelig, doppelkegelig oder stufig ausgebildet sein kann, in der Z-Y-Ebene des Koordinatensystems 62 insbesondere in Z-Richtung entlang der Zahnaußenflächen bzw. -innenflächen geführt. Das Koordinatensystem 62 ist als einzelzahnbezogenes System zu verstehen, so daß die Zahnaußenflächen bzw. -innenflächen jedes Zahnes 58 in der Z-Y-Ebene und die Interdentalräume 60 in der Z-X-Ebene liegen. Eine Reinigung der Interdentalräume 60 ist bei der Benutzung der stufigen Bürste 41 besonders wirksam durchführbar, wenn der Schaft 38 im wesentlichen längs der Y-Richtung des Koordinatensystems 62 geführt wird. Die stufige Bürste 41 hat den Vorteil, daß die Walze mit dem großen Durchmesser bei dieser Handhabung in die Interdentalräume 60 eindringen kann, wobei sich die Walze mit dem kleineren Durchmesser an der Zahnaußenfläche bzw. -innenfläche abstützt.

Wird die Bürste 41 in Richtung der x-Achse in einen Interdentalraum 60 hineinbewegt (Fig. 7a, b, c), schützen die Borsten großer Länge am ersten Endabschnitt 50 des Schaftes 38 die Zähne 58 sowie das Zahnfleisch vor einem Berührungskontakt mit dem Schaft 38 (Fig. 7a). Sind die Interdentalräume beispielsweise krankheitsbedingt oder von der Anlage des Benutzers her so groß ausgebildet, daß die Bürste 41 gänzlich in den Interdentalraum 60 eingeführt werden kann (Fig. 7b) werden Zähne 58 sowie das Zahnfleisch gleichfalls durch die im Mittelteil der Bürste 41 angeordneten Borsten vor Berührungen mit dem Schaft 38 geschützt.

Eine Reinigung von Interdentalräumen 60 ist bei Verwendung der doppelkegeligen Bürste 41 (Fig. 4) besonders wirksam durchführbar, da durch den größeren Durchmesser in der Mitte die Bürste 41 automatisch in dem Interdentalraum 60 gehalten wird (Fig. 7c). Ein Ausbrechen der Bürste 41 aus dem Interdentalraum 60 wird verhindert. Die Reinigung des Interdentalraumes 60 wird dadurch wesentlich erleichtert.

Der oszillierende Antrieb der Bürste 41 sorgt für eine hohe Reinigungswirkung der Bürsten 41, wobei die Bürsten 41 durch ihre spezielle Ausgestaltung eine Beschädigung der Zähne bzw. eine Verletzung des Zahnfleisches weitestgehend vermeiden.

Weiterhin sorgt die oszillierende Bewegung der Bürste in einem Winkelbereich von etwa +/- 35° +/- 5° dafür, daß im Falle der Verwendung eines Schaftes 38, der aus einer verdrillten Doppeldrahtanordnung 56 besteht, die Bürste sich nicht in einen Interdentalraum 60 hineinschrauben kann, wie dies bei einem rotierenden Antrieb der Bürsten 41 der Fall sein könnte.

Dieser wesentliche Vorteil, also die Vermeidung des Hineinschraubens einer Bürste in einen Interdentalraum durch eine oszillierende Bewegung der Bürste, ist dabei völlig unabhängig von der Form der Bürste und kann deshalb auch mit bereits bekannten Bürsten erreicht werden.

Die im wesentlichen senkrechte Anordnung des Schaftes 31 der Bürste 41 in Bezug auf eine Längsachse des Bürstenteils 24 bzw. des Griffteils 22 erlaubt eine vielseitige, handgerechte Positionierung der Bürste 41 bezüglich der zu reinigenden Zähne 58 bzw. Interdentalräume 60.

## Patentansprüche

1. Motorisch angetriebene Zahnbürste (20) mit einem Griffteil (22) und einem daran ankuppelbaren Bürstenteil (24), welches eine Bürste (41) zum Reinigen der Zähne (58), insbesondere der Interdentalräume (60) aufweist, wobei die Bürste (41) aus einem Borstenträger und daran festgelegten Borsten (45) besteht und mittels des Antriebes in eine oszillierende Drehbewegung um die Achse eines Schaftes (38) des Borstenträgers versetzbar ist, der Borstenträger als stabförmiger Schaft (38) mit einem ersten und zweiten Endabschnitt (50, 52) ausgebildet und im Bereich des zweiten Endabschnittes (52) unbeborstet ist, die Borsten (45) sich im Bereich des ersten Endabschnittes (50) bezüglich des Schaftes (38) radial und umfangsmäßig verteilt erstrecken, **dadurch gekennzeichnet,** daß die Länge der Borsten (45) ausgehend vom ersten Endabschnitt (50) des Schaftes (38) zuerst in Richtung zur Mitte des beborsteten Abschnitts des Schaftes (38) abnimmt und dann in Richtung des zweiten Endabschnitts (52) des Schaftes (38) wieder zunimmt.

2. Zahnbürste nach Anspruch 1, **dadurch gekennzeichnet,** daß die Länge der Borsten (45) mit wachsendem axialem Abstand vom ersten Endabschnitt (50) des Schaftes (38) zuerst linear abnimmt und dann wieder linear zunimmt.

3. Zahnbürste nach einem der vorhergehenden Ansprüche, **dadurch gekennzeichnet,** daß der kleinste Durchmesser der Bürste (41) symmetrisch in der Mitte des beborsteten Abschnitts des Schaftes (38) vorgesehen ist.

4. Zahnbürste nach einem der vorhergehenden Ansprüche, **dadurch gekennzeichnet,** daß der Durchmesser der Bürste (41) von einem Wert im Bereich 8 ± 2 mm zuerst auf einen Wert im Bereich 4 ± 2 mm abnimmt und dann wieder auf einen Wert im Bereich 8 ± 2 mm zunimmt.

5. Zahnbürste nach einem der vorhergehenden Ansprüche, **dadurch gekennzeichnet,** daß die Borstenstärke Werte im Bereich von 0,1524 ± 0,0254 mm (6 ± 1 mil) aufweist.

6. Zahnbürste nach einem der vorhergehenden Ansprüche, **dadurch gekennzeichnet,** daß die axiale Länge des beborsteten Bereichs des Schaftes (38) Werte im Bereich von 12 ± 3 mm und die Länge des unbeborsteten Abschnittes des Schaftes (38) Werte im Bereich von 9 ± 3 mm annimmt.

7. Zahnbürste nach einem der vorhergehenden Ansprüche, **dadurch gekennzeichnet,** daß der Schaft (38) aus einer verdrillten Doppeldrahtanordnung (56) besteht und die Borsten (45) zwischen den Drähten der Doppeldrahtanordnung (56) festgelegt sind.

8. Zahnbürste nach einem der vorhergehenden Ansprüche, **dadurch gekennzeichnet,** daß der Schaft (38) der Bürste (41) im wesentlichen senkrecht zu einer Längsachse des Bürstenteils (24) und gegebenenfalls des Griffteils (22) angeordnet ist.

9. Zahnbürste nach einem der vorhergehenden Ansprüche, **dadurch gekennzeichnet,** daß der Oszillationswinkel Werte im Bereich von ± 20° bis ± 100°, bevorzugt ± 35° ± 5° annimmt.

## Claims

1. A motor-powered toothbrush (20) having a handle member (22) and a brush member (24) adapted to be coupled thereto, said brush member including a brush (41) for cleaning the teeth (58), in particular the interproximal areas (60), said brush (41) being comprised of a bristle supporting structure and bristles (45) fixedly secured thereto, and being adapted to be set in an oscillating rotating motion about the axis of a stem (38) of the bristle supporting structure by means of the driving mechanism, said bristle supporting structure being configured as a rod-shaped stem (38) having a first and a second end portion (50, 52) and carrying no bristles in the region of the second end portion (52), said bristles (45) extending radially relative to the stem (38) and in a circumferentially distributed pattern in the region of the first end portion (50), characterized in that, starting from the first end portion (50) of the stem (38), the length of the bristles (45) diminishes initially in the direction of the center of the bristled portion of the stem (38), subsequently increasing again in the direction of the second end portion (52) of the stem (38).

2. The toothbrush as claimed in claim 1, characterized in that the length of the bristles (45) initially decreases linearly with the axial distance from the first end portion (50) of the stem (38) increasing, subsequently increasing again linearly.

3. The toothbrush as claimed in any one of the preceding claims, characterized in that the smallest diameter of the brush (41) is provided symmetrically in the center of the bristled portion of the stem (38).

4. The toothbrush as claimed in any one of the preceding claims, characterized in that the diameter of the brush (41) decreases initially from a value in the range of 8 +/- 2 mm to a value in the range of 4 +/- 2 mm, subsequently increasing again to a value in the range of 8 +/- 2 mm.

5. The toothbrush as claimed in any one of the preceding claims, characterized in that the bristles have a thickness in the range of 0.1524 +/- 0.0254 mm (6 +/-1 mils).

6. The toothbrush as claimed in any one of the preceding claims, characterized in that the axial length of the bristled portion of the stem (38) assumes values in the range of 12 +/- 3 mm, and the length of the portion of the stem (38) carrying no bristles assumes values in the range of 9 +/- 3 mm.

7. The toothbrush as claimed in any one of the preceding claims, characterized in that the stem (38) is comprised of a twisted two-wire arrangement (56), and the bristles (45) are fixedly secured between the wires of the two-wire arrangement (56).

8. The toothbrush as claimed in any one of the preceding claims, characterized in that the stem (38) of the brush (41) is arranged substantially normal to a longitudinal axis of the brush member (24) and, where applicable, to the handle member (22).

9. The toothbrush as claimed in any one of the preceding claims, characterized in that the angle of oscillation assumes values in the range of +/- 20° to +/-100°, preferably +/- 35° +/- 5°.

## Revendications

1. Brosse à dents (20) entraînée par moteur, comportant une partie de poignée (22) et une partie de brosse (24) susceptible d'être accouplée à celle-ci et présentant une brosse (41) pour nettoyer les dents (58), en particulier les entredents (60), dans laquelle la brosse (41) est constituée par un support de poils et par des poils (45) fixés sur celui-ci et peut être mise en un mouvement de rotation oscillant autour de l'axe d'une tige (38) du support de poils au moyen de l'entraînement, dans laquelle le support de poils est réalisé sous forme d'une tige en forme de barreau (38) présentant un premier tronçon final (50) et un second tronçon final (52) et ne présente pas de poils dans la région du second tronçon final (52), et dans laquelle les poils (45) s'étendent en répartition périphérique et radiale par rapport à la tige (38) dans la région du premier tronçon final (50), caractérisée en ce que la longueur des poils (45) diminue en partant du premier tronçon final (50) de la tige (38) tout d'abord en direction du milieu du tronçon à poils de la tige (38) et augmente ensuite en direction du second tronçon final (52) de la tige (38).

2. Brosse à dents selon la revendication 1, caractérisée en ce que la longueur des poils (45) diminue tout d'abord linéairement en fonction de l'augmentation de la distance axiale du premier tronçon final (50) de la tige (38), et augmente ensuite à nouveau linéairement.

3. Brosse à dents selon l'une ou l'autre des revendications précédentes, caractérisée en ce que le plus petit diamètre de la brosse (41) est prévu de manière symétrique au milieu du tronçon à poils de la tige (38).

4. Brosse à dents selon l'une quelconque des revendications précédentes, caractérisée en ce que le diamètre de la brosse (41) diminue tout d'abord pour passer d'une valeur de l'ordre de 8 ± 2 mm à une valeur de l'ordre de 4 ± 2 mm, et augmente ensuite à une valeur de l'ordre de 8 ± 2 mm.

5. Brosse à dents selon l'une quelconque des revendications précédentes, caractérisée en ce que l'épaisseur des poils présente des valeurs de l'ordre de 0,1524 ± 0,0254 mm (6 ± 1 mil).

6. Brosse à dents selon l'une quelconque des revendications précédentes, caractérisée en ce que la longueur axiale de la région à poils de la tige (38) prend des valeurs de l'ordre de 12 ± 3 mm, et la longueur du tronçon sans poils de la tige (38) prend des valeurs de l'ordre de 9 ± 3 mm.

7. Brosse à dents selon l'une quelconque des revendications précédentes, caractérisée en ce que la tige (38) est constituée par un agencement de fil en double torsadé (56) et les poils (45) sont fixés entre les fils de l'agencement de fil en double (56).

8. Brosse à dents selon l'une quelconque des revendications précédentes, caractérisée en ce que la tige (38) de la brosse (41) est agencée sensiblement perpendiculairement à un axe longitudinal de la partie de brosse (24) et éventuellement de la partie de poignée (22).

9. Brosse à dents selon l'une quelconque des revendications précédentes, caractérisé en ce que l'angle d'oscillation prend des valeurs de l'ordre de ± 20° à ± 100°, de préférence ± 35° ± 5°.
